(19) Europäisches Patentamt
European Patent Office
Office européen des brevets

(11) **EP 2 095 725 A1**

(12) **EUROPEAN PATENT APPLICATION**
published in accordance with Art. 153(4) EPC

(43) Date of publication:
**02.09.2009 Bulletin 2009/36**

(51) Int Cl.:
***A23L 1/237*** *(2006.01)*

(21) Application number: **06833825.0**

(22) Date of filing: **30.11.2006**

(86) International application number:
**PCT/JP2006/324022**

(87) International publication number:
**WO 2008/068814 (12.06.2008 Gazette 2008/24)**

(84) Designated Contracting States:
**AT BE BG CH CY CZ DE DK EE ES FI FR GB GR HU IE IS IT LI LT LU LV MC NL PL PT RO SE SI SK TR**

(71) Applicant: **NASACORE CO., LTD.**
**Saitama 340-0004 (JP)**

(72) Inventors:
• **KIYOKAWA, Shin**
**Soka-shi**
**Saitama 340-0004 (JP)**

• **KIYOKAWA, Taro**
**Soka-shi**
**Saitama 340-0004 (JP)**

(74) Representative: **Glawe, Delfs, Moll**
**Patent- und Rechtsanwälte**
**Postfach 26 01 62**
**80058 München (DE)**

(54) **POWDERY DRY SEASONING, PROCESS FOR PRODUCING THE SAME, AND APPARATUS FOR PRODUCING THE SAME**

(57) Seasoning of liquid material containing at least sodium chloride, seasoning components and solvent is dried at a temperature not more than the boiling temperature of the liquid material to generate mixture bodies containing large-diameter spherical bodies and small-diameter spherical bodies. Accordingly, the solvent is not rapidly vaporized, but it is slowly vaporized and components dissolved in water, and particularly sodium chloride is not agglomerated on the surface layer portions of the large-diameter spherical bodies, but kept inside the large-diameter spherical bodies. Therefore, segregation of sodium chloride on the surface layer portions can be suppressed, and deliquescence is reduced. Accordingly, there can be obtained dry powder seasoning which is low in deliquescence under a using state and excellent in storage stability for a long term.

FIG.11

EP 2 095 725 A1

**Description**

**Technical Field**

The present invention relates to dry powder seasoning manufactured by drying liquid type seasoning, and method and apparatus for manufacturing the dry powder seasoning.

**Background Art**

Soy sauce is known as typical liquid-type seasoning which has been consumed on a massive scale in Japan. Many kinds of commercial products of soy sauce such as "koikuchi" (strong) soy sauce, "usukuchi" (light-colored and saltier) soy sauce, "tamari" (thick-tasted) soy sauce, "shiro" (white) soy sauce, "saishikomi" (twice-brewed) soy sauce, "ki" (non-pasteurized) soy sauce, "genen" (salt-reduced) soy sauce, etc. are manufactured and sold. Normally-available soy sauce is liquid-type soy sauce, and it is packed in a container such as a glass bottle, a PET bottle or the like, stocked, transported and then sold. Furthermore, it is divided into a small-size container and used in a small-lot style. However, when the liquid-type soy sauce is stocked and transported, the transport cost is increased because it has large volume and weight. Furthermore, when it is preserved at a high-temperature place, it trends to change its nature in a short period of time. Therefore, there is a problem that the preserving condition is very severe and the taste is changed under preservation. Accordingly, soy sauce fresh from the brewery is popularly used. Powder milk and soap of instant noodle, etc. are dried to obtain powder according to a freezing and drying method, a spray drying method or the like so that the volume is reduced, thereby enhancing handling performance and storage stability.

(Concerning deliquescence)

However, the dried soy sauce has an essential problem.
That is, first, it has a "deliquescent property". In the case where the dried soy sauce has the deliquescent property, for example when it is left alone under an atmosphere of about 50 to 60% in humidity under the state that it is heaped up on a flat-plate type container of about 5cm in diameter, the surface layer of the dried soy sauce absorbs moisture in about 2 to 3 hours under the above state, and the moisture-absorbed portion of the dried soy sauce is hardened along the mountain-like shape. Accordingly, the dried soy sauce falls into such a state that the moisture-absorbed hardened portion exfoliates from the mountain of the dried soy sauce as if it is like a conical baked cake or scab. Furthermore, when the dried soy sauce is preserved all day and night, it is transformed to sticky paste as a whole and thus it is remarkably hard to be handled.
Secondly, it is substantiallydifficult to put fine powder of dried soy sauce into a small container and use it as a powder sparingly like sprinkle due to the deliquescent property or the moisture absorption property described above. As described above, the surface layer is agglomerated and solidified like scab due to the moisture absorption for a short time as described above, and thus the take-out port of the container is clogged in a short period of time.
Thirdly, when the dried soy sauce is returned to original liquid, the taste of the soy sauce greatly varies. If it is stocked for a long term, it would grow musty and turn stale.
Particularly, a large amount of "excipient" has been hitherto added to manufacture dried soy sauce in a powdery form, and thus the taste of the dried soy sauce varies when the dry powder soy sauce is returned to the original state.

(Drying Method)

A drying-by-heating method is frequently used for powdery seasoning such as powder milk, soap of instant noodle, etc. and chemicals. A spray drying machine (spray dryer) is frequently used as a drying machine for implementing the above drying method.
Furthermore, a pressure-reduced dram drying method, a vacuum-freeze drying method or a spray drying method is used as a method of drying soy sauce, and the spray drying method is most preferable. A pressurized nozzle type spray dryer, a two fluid nozzle type spray dryer, a desk-atomizer type spray dryer, a spray-drying and granulating dryer or the like is used as a preferable machine used for the spray drying method (see non-patent document 1, patent documents 1 and 2).
It has been hitherto general that high-pressure air and soy sauce are sprayed into a drying tower in which hot air is supplied from the upper side to the lower side, or miniaturized soy sauce is discharged under a dispersion state by a rotating disc and then atomized liquid droplets of soy sauce are heated to be dried. In this case, the hot air is set to 120°C to 200°C, and high-temperature heating air of 260°C is adopted in consideration of efficiency.
Non-patent Document 1: "Base and Application of Dried food" issued by Kabushikikaisha Saiwaishobo on September 1, 1997, pp92-94 Patent Document 1: JP-A-2004-105066

Patent Document 2: JP-A-7-213249

Disclosure of the Invention

**Problem to be solved by the Invention**

In general, dextrin is added as "excipient" so that soy sauce is used as raw material and it is dried to form dry powder soy sauce. This is because it is impossible to manufacture granular dry powder soy sauce having desired size when no excipient is used. However, the excipient is a material having an excellent property which enhances water solution of powder, and thus greatly contributes to deliquescence. Accordingly, the conventional dry powder soy sauce contains a large amount of dextrin, so that it is deteriorated in storage stability and it is not used in such an application that a lid is opened and closed. In addition, when water is added to dry powder soy sauce containing dextrin to return the dry powder soy sauce to the original liquid, the components thereof become different from those of the original soy sauce, and thus the taste is different from the original taste, so that deterioration of quality is unavoidable. Furthermore, dry powder manufactured by using the conventional spray dryer and high-temperature hot air contains a slight quantity of moisture (about 2 to 3%) in the solid content thereof, and most of moisture which existed as soy sauce was evaporated. However, this dry powder soy sauce has deliquescence and it absorbs moisture in a short period of time as described above.

Therefore, an obj ect of the present invention is to solve the above problem of the conventional techniques described above, and provide dry powder seasoning that has low deliquescence when it is used and excellent storage stability for a long term, a method of manufacturing the dry powder seasoning and a method of manufacturing the dry powder seasoning.

**Means of solving the Problem**

In order to solve the above problems, according to the present invention, dry powder seasoning is characterized by comprising mixtures containing large-diameter spherical bodies and small-diameter spherical bodies generated by drying seasoning of a liquid material containing at least sodium chloride, seasoning components and solvent under a temperature which is not more than the boiling temperature of the liquid material so as to suppress segregation of sodium chloride on surface layer portions of the large-diameter spherical bodies.

According to the present invention, by drying the seasoning at the boiling temperature of the liquid material or less, the solvent constituting the liquidmaterial is not rapidly vaporized, but slowly vaporized.

Therefore, when the large-diameter spherical bodies are formed, water vapor slowly moves from the inside of the large-diameter spherical bodies to the outside thereof, and is slowly discharged from the surfaces. Therefore, the components dissolved in the moisture, particularly sodium chloride is not assembled on the surface layer portion, and can be kept inside the large-diameter spherical bodies.

Accordingly, crystallization caused by consolidation of sodium chloride is not promoted, and thus segregation of sodium chloride on the surface layer portions of the large-diameter spherical bodies can be suppressed, so that deliquescence can be kept to a low level.

In this case, preferably, chlorine and sodium may be distributed under a substantially uniform dispersive state to suppress the segregation of sodium chloride. Furthermore, more preferably, the seasoning of the liquid material may be dried at a temperature which is not more than the azeotropic point of alcohol and water contained in the solvent to generate the mixture bodies of the large-diameter spherical bodies and the small-diameter spherical bodies.

In this construction, by drying the seasoning at a temperature which is not more than the boiling temperature of alcohol and water contained in the solvent, alcohol and "umami" components dissolved in alcohol are suppressed from being lost due to evaporation of alcohol, and the "umami" components and alcohol can be kept in the large-diameter spherical bodies and the small-diameter spherical bodies, so that the dry powder seasoning can keep a taste closer to the taste of the raw-material seasoning.

Furthermore, preferably, the surface portions of the large-diameter spherical bodies may be formed to have smooth surfaces having no rift.

Still furthermore, preferably, the moisture content of each mixture body may be in the range from 4% to 12% by weight.

Still furthermore, the diameter of the large-diameter spherical bodies may be equal to $40\mu$m or more.

Furthermore, a method of drying seasoning of a liquid material containing at least sodium chloride, seasoning components and solvent to manufacture dry powder seasoning, is characterized by comprising: spraying the seasoning of the liquid material into a drying tower so as to obtain fog drips of the seasoning, the drying tower being controlled so that the temperature in the main body of the tower is not more than the boiling temperature of the liquid material and the temperature of an inner wall surface thereof at a high place is lower than the temperature of an inner wall surface thereof at a low place; and drying the fog drips while the fog drips are convected vertically in the drying tower.

In this case, preferably, the temperature in the drying tower may be controlled so that the temperature concerned is not more than the azeotropic point of alcohol and water contained in the solvent, and the seasoning of the liquid material may be sprayed into the drying tower so as to obtain fog drips of the seasoning.

More preferably, a temperature difference may be provided to the inner wall surface of the main body of the drying tower, and ascending currentmaybe generated along the inner wall surface by using the temperature difference.

Furthermore, an apparatus for drying seasoning of a liquid material containing at least sodium chloride, seasoning components and solvent to manufacture dry powder seasoning is characterized by comprising: a drying tower; a raw-material seasoning spraying unit disposed at an upper portion of the main body of the drying tower; a raw-material seasoning supply device having a temperature control function that is connected to the spraying unit; a cyclone connected to a lower portion of the main body of the drying tower to separate power dry soy sauce; a gas exhaust device for keeping the inside of the cyclone under a pressure-reduced state; a heating unit such as an electric heater or the like provided to the outer surface of the main body of the drying tower; a temperature sensor for measuring the temperature of a required place of the main body of the tower; and a controller for controlling a heating state of the heating unit so that the temperature in the main body of the tower is not more than the boiling temperature of the liquid material and the temperature of an inner wall surface thereof at a high place is lower than the temperature of an inner wall surface thereof at a low place.

Accordingly, in the apparatus of this invention, by drying the seasoning at the boiling temperature of the liquid material or less, the solvent constituting the liquid material is not rapidly vaporized, but slowly vaporized.

Therefore, when the large-diameter spherical bodies are formed, water vapor slowly moves from the inside of the large-diameter spherical bodies to the outside thereof, and is slowly discharged from the surfaces. Therefore, the components dissolved in the moisture, particularly sodium chloride is not assembled on the surface layer portion, and can be kept inside the large-diameter spherical bodies.

Accordingly, crystallization caused by consolidation of sodium chloride is not promoted, and thus segregation of sodium chloride on the surface layer portions of the large-diameter spherical bodies can be suppressed, so that deliquescence can be kept to a low level.

In this case, preferably, the controller may control the heating state of the heating unit so that the temperature in the main body of the drying tower is not more than the azeotropic point of alcohol and water contained in the solvent, and the temperature of the inner wall surface thereof at the high place is lower than the temperature of the inner wall surface thereof at the low place.

In this construction, by drying the seasoning at a temperature which is not more than the boiling temperature of alcohol and water contained in the solvent, alcohol and "umami" components dissolved in alcohol are suppressed from being lost due to evaporation of alcohol. Accordingly, the large-diameter spherical bodies or the small-diameter spherical bodies can keep the "umami" components and alcohol , and thus there can be manufactured the dry powder seasoning which keeps a taste closer to the taste of the raw-material seasoning.

Furthermore, more preferably, the inner wall surface of the main body of the drying tower is subjected to water repellent finishing such as silicon finishing, fluorocarbon resin finishing or the like to prevent adhesion of droplets to the inner wall surface of the main body of the drying tower.

Furthermore, further preferably, a ceramic layer having a double-layer structure which contains an aluminum-oxide spray layer mainly containing aluminum oxide and a titan-oxide spray layer mainly containing titan oxide formed on the aluminum oxide spray layer may be formed on the outer surface of the main body of the drying tower, and the heating unit may be disposed on the outer surface of the titan-oxide layer.

Still furthermore, preferably, the heating unit is disposed in each of at least three areas sectioned in the longitudinal direction of the main body of the drying tower through an electrically insulating layer on the ceramic layer having the double structure formed on the outer surface of the main body of the drying tower, and the controller controls the temperature of each of the heating units independently.

Effect of the Invention

According to this invention, mixtures containing large-diameter spherical bodies and small-diameter spherical bodies are generated by drying seasoning of a liquid material containing at least sodium chloride, seasoning components and solvent under a temperature which is not more than the boiling temperature of the liquid material. Therefore, segregation of sodium chloride on surface layer portions of the large-diameter spherical bodies can be suppressed in the process of generating the mixture bodies, and the components causing deliquescence hardly comes into contact with air, or protected frombeing exposed, so that the deliquescence under the use state can be reduced, and the storage stability for a long term can be enhanced.

**Brief Description of the Drawings**

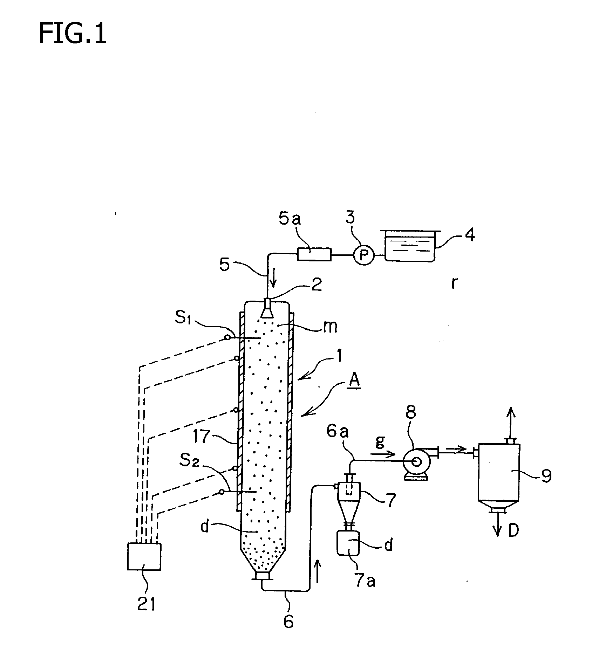

{Fig. 1] is a diagram showing an example of an apparatus for implementing the present invention.

[Fig. 2] (A) is a diagram showing the flow of an air current in a drying tower shown in Fig. 1, and (B) is a diagram showing an occurrence state of a mixture stream in the drying tower shown in Fig. 1.

[Fig. 3] is a partially cross-sectional view showing the main body of the drying tower.

[Fig. 4] is a partially cross-sectional view showing the main body of the drying tower.

[Fig. 5] is a longitudinally sectional view of a nozzle.

[Fig. 6] is a V-V cross-sectional view of Fig. 5.

[Fig. 7] is a cross-sectional view of the nozzle.

[Fig. 8] is a longitudinally-sectional view of the nozzle.

[Fig. 9] is a cross-sectional view of the nozzle.

[Fig. 10 shows a scanning electron micrograph of powder soy sauce obtained by a manufacturing method of an embodiment.

[Fig. 11] is an enlarged scanning electron micrograph of the powder soy sauce of Fig. 10.

[Fig. 12] is a scanning electron micrograph of dry powder soy sauce obtained by a conventional manufacturing method.

[Fig. 13] is a diagram showing the correspondence relation between the surface state of a dry powder soy sauce sample and an element analysis result of the surface layer.

[Fig. 14] is a diagram showing the element analysis result of the surface layer based on a reflection electron image of a conventional dry powder soy sauce sample.

[Fig. 15] is a scanning electron micrograph the embodiment..

[Fig. 16] is a scanning electron micrograph of the conventional example.

[Fig. 17]is a sketch of the micrograph of the dry powder soy sauce of the embodiment.

[Fig. 18] is sketch of the micrograph of the dry powder soy sauce of the embodiment.

[Fig. 19] is a micrograph of the dry powder soy sauce of the embodiment.

[Fig. 20] is a micrograph of the dry powder soy sauce of the embodiment.

[Fig. 21] is a micrograph of the dry powder soy sauce of the embodiment.

[Fig. 22] is a micrograph of the dry powder soy sauce of the embodiment.

[Fig. 23] is a sketch of a micrograph of the dry powder soy sauce obtained by the conventional method.

[Fig. 24] is a sketch of a micrograph of the dry powder soy sauce obtained by the conventional method.

[Fig. 25] is a micrograph of the dry powder soy sauce obtained by the conventional method.

[Fig. 26] is a micrograph of the dry powder soy sauce obtained by the conventional method.

[Fig.27] is a micrograph of the dry powder soy sauce obtained by the conventional method.

[Fig.28] is a micrograph of the dry powder soy sauce obtained by the conventional method.

Description of Reference Numerals

| | |
|---|---|
| 1 | main body of drying tower |
| 2 | spray nozzle |
| 3 | pump |
| 4 | raw material tank |
| 5a | heater |
| 6 | duct |
| 7 | cyclone |
| 8 | blower |
| 9 | exhaust processing device |
| 17 | electric heater |
| D | drain |
| d | dry powder soy sauce |
| dn | downward flow |
| m | fog drip |
| r | raw material soy sauce |
| S1, S2 | temperature sensor |

u        upward flow

**Best modes for carrying out the Invention**

An embodiment of the present invention will be described hereunder with reference to the accompanying drawings.
Fig. 1 is a manufacturing apparatus of an embodiment.
In Fig. 1, reference numeral 1 represents the main body of a drying tower, and a spray nozzle 2 (two fluid type spray nozzle) is connected to the upper portion of the drying tower main body 1. A heater 5a and a pump 3 are successively connected to the spray nozzle 2, and a tank 4 filled with soy source r is connected to the pump 3. The soy sauce r in the tank 4 is pressurized by the pump 3, heated by the heater 5a, passed through a pipe 5, supplied to the spray nozzle 2 every predetermined amount, and sprayed into the tower main body 1 to form fine fog drips m. The heater 5a is interposed because when low-temperature soy sauce is directly sprayed, dry powder soy sauce cannot be smoothly formed and thus there is a risk that explosive vaporization may occur in some cases.

The drying tower main body 1 is designed to be relatively long and vertically cylindrical because low-temperature drying is applied, and a cylindrical apparatus of 0.5m to -1m in diameter and 5m to 10m in height is used, for example. Therefore, the time for which the fog drips move downwardly in the tower main body 1 is set to be long so that powder materials can be sufficiently formed by even the low-temperature heating.

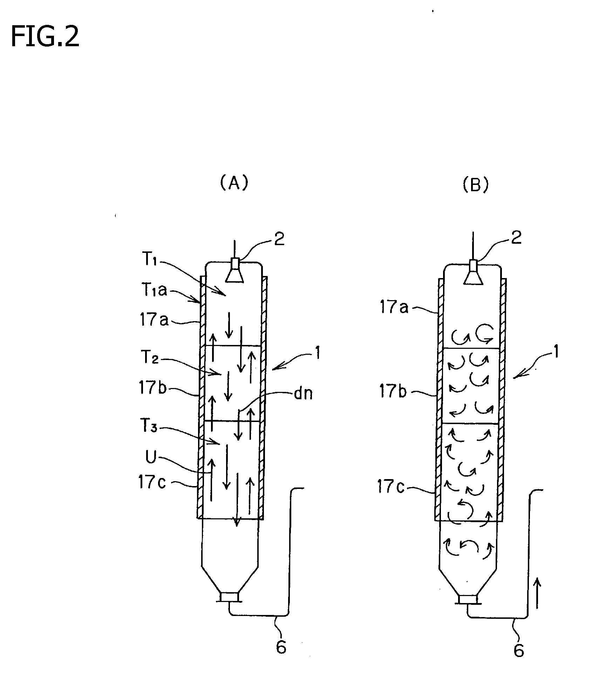

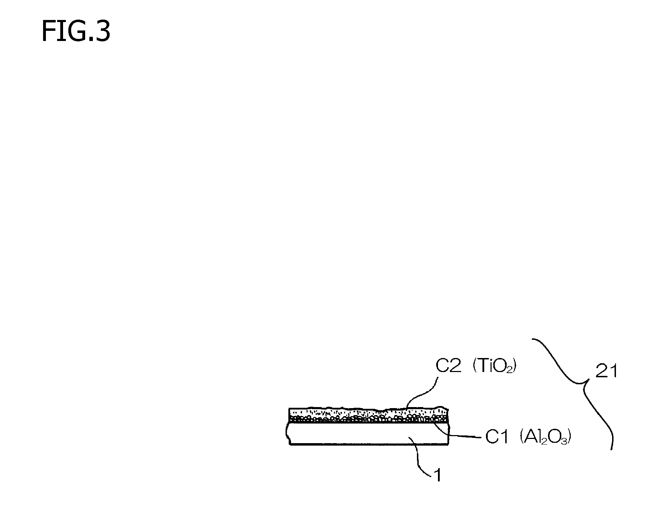

Figs. 2 (A) and 2 (B) are partially longitudinally-sectional views of the drying tower main body, and Fig. 3 is a diagram showing a double-layer structure ceramic layer formed on the drying tower main body. The drying tower main body 1 is formed of aluminum. Alumina ceramic layer C1 is thermally sprayed to the outer surface of the drying tower main body 1, and a titanium oxide ceramic layer C2 is thermally sprayed onto the alumina ceramic layer C1 to form the double-layer structure ceramic layer 21.

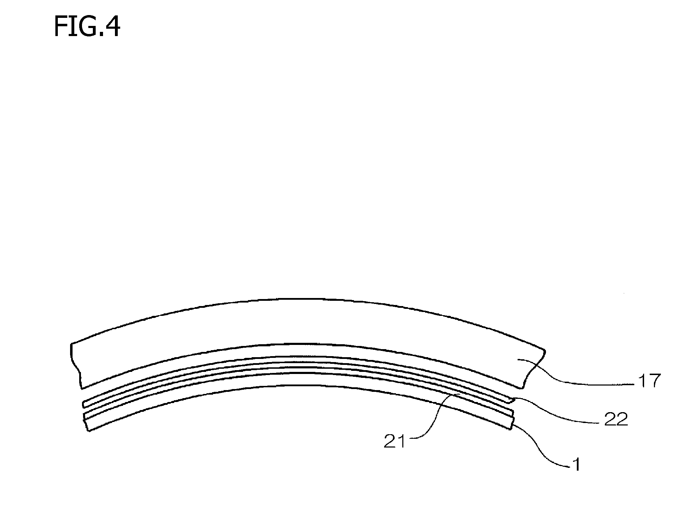

A far infrared electric heater 17 is provided on the upper layer of the outer surface of the double-structure ceramic layer 21 through an electrical insulating layer 22 as shown in Fig. 4. As shown in Fig. 2, the electrical heater 17 is divided into plural stages (17a, 17b, 17c) in the longitudinal direction of the drying tower main body 1, whereby the temperature in the longitudinal direction of the tower main body 1 can be freely adjusted. Furthermore, as shown in Fig. 1, a plurality of temperature sensors S1, S2 for measuring the temperature in the drying tower main body 1 and a temperature distribution are provided at least at the upper portion, the intermediate portion and the lower portion, whereby the temperature in the drying tower main body 1 can be wholly controlled in a comprehensive manner.
Furthermore, the inner surface of the tower dry main body 1 is coated with silicon resin film or fluorocarbon resin film as water repellent resin so that no fog drip of soy sauce does not adhere to the inner surface, and the dry powder soy sauce can be efficiently generated.

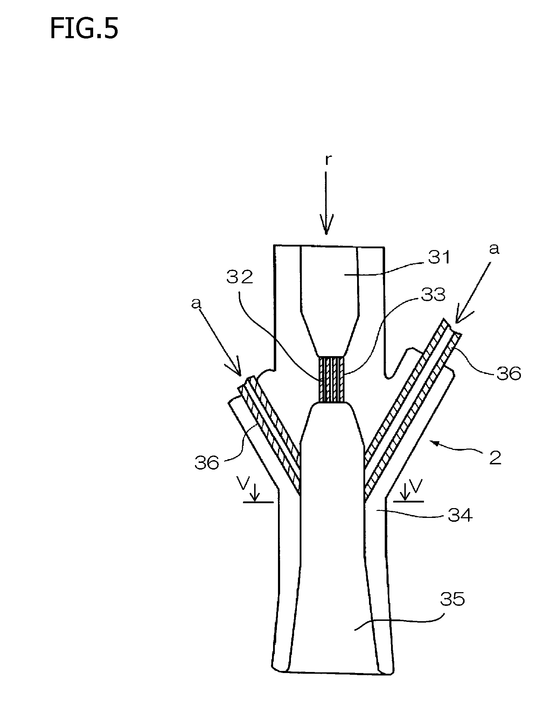

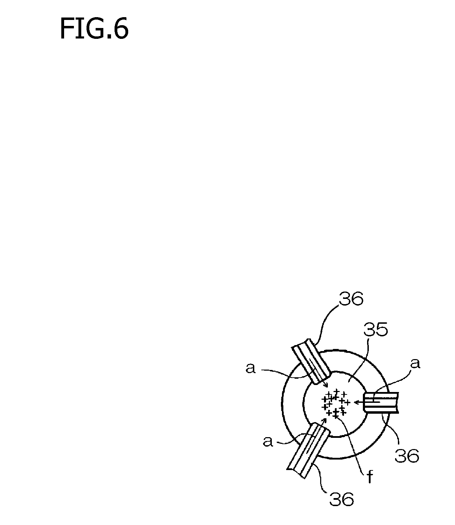

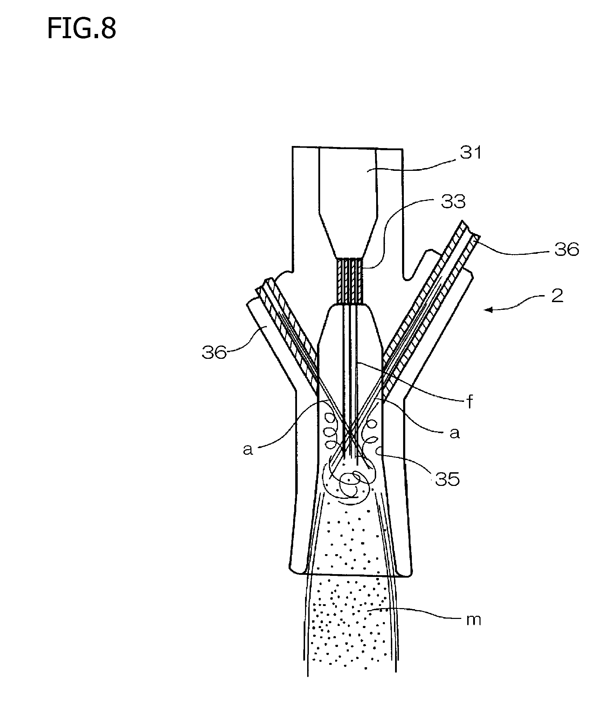

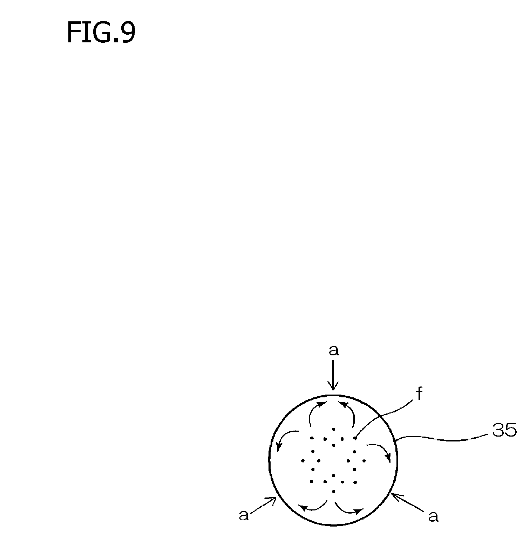

Fig. 5 is a longitudinally sectional view of a spray nozzle, Fig. 6 is a V-V sectional view of Fig. 5 and Figs. 7 to 9 are diagrams showing generation of fog drips.
The spray nozzle 2 has a fluid reservoir 31 for temporarily stocking soy sauce r from the pump 3, and the fluid reservoir 31 intercommunicates with a fog drip generator 35 (= fog drip generating space) through plural fine pores 32. Reference numeral 33 represents a nozzle portion for jetting the supplied soy sauce r like shower.
As shown in Fig. 6, three air introducing paths 36 intercommunicate with the fog drip generator 35, and the three air introducing paths 36 extend to the center of the fog drip generator 35 so as to intersect to one another. Compressed air (air a) which is heated to a predetermined temperature is introduced into each air introducing path 36 through a heated air supply unit (not shown).

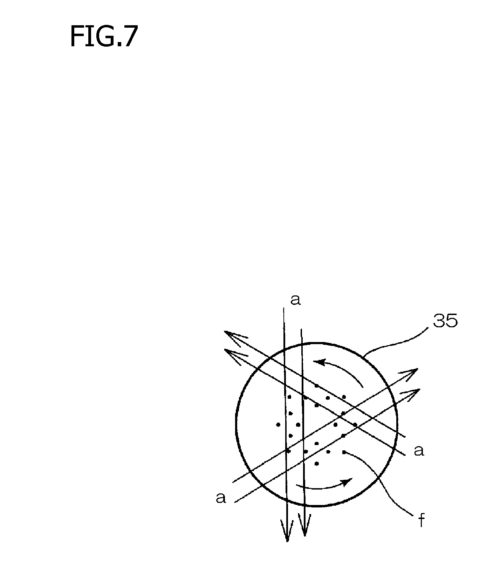

When the pump 3 is driven and soy sauce r is supplied into the fluid reservoir 31, the supplied soy sauce r is introduced into the nozzle portion 33 having the plural fine pores 32, and supplied as shower-like soy sauce f into the fog drip generator 35. When air a is introduced from the air introducing paths 36 under the above state, eddy flow occurs in the fog drip generator 35 as shown in Figs. 7 to 9, and the shower-like soy sauce f is ruffled to form fog drips m. Then, the fog drips drop from an opening at the lower portion of the fog drip generator 35 into the drying tower main body 1.
At this time, the air a introduced from each air introducing path 36 is sprayed substantially to the confronting position on the inner surface of the fog drip generator 35, and flows along the wall of the body portion, so that the fog drips f drops without coming into contact with the body portion.

A pipe or duct 6 is connected to the lower portion of the drying tower main body 1, and the duct 6 is connected to a supply pipe of a cyclone 7. The exhaust pipe 6a of the cyclone 7 is connected to a blower 8 for strongly exhausting air. The exhausted air from the blower 8 is led to an exhaust treating apparatus 9, and the exhaust treating apparatus 9 has a function of liquefying water vapor occurring in a drying step by mist of cooling water to obtain drain D or separating and removing solid contents contained in the exhaust air through a filter. Dry powder soy sauce d which is separated by the cyclone 7 and obtained as a generated resultant is accommodated into a tank 7a connected through a valve.

In Fig. 2(A), the electric heater 17 is divided into three sections 17a, 17b and 17c, and these sections can be controlled in temperature so as to be different in temperature among them. For example, the temperature of the electric heater 17a can be controlled so that the temperature T1 at a portion where the spray nozzle 2 exists is equal to 60°C, the temperature of the electric heater 17b can be controlled so that the temperature T2 at the intermediate portion is equal to 65°C and further the temperature of the electric heater 17c can be controlled so that the temperature T3 at the lower portion is equal to 75°C. Here, it is difficult to accurately measure the internal temperature of the drying tower main body 1 due to the influence of air current, radiation heat, etc. Therefore, there may be adopted a control method of accurately measuring the temperature at the portion of the electric heater 17 and estimating the internal temperature of the drying tower main body 1.

In the above construction, it is a main idea that thermal energy is indirectly applied to the spraymist by using far infrared ray radiated from the inside of the drying tower 1 to dry the spray mist. It is needless to say that thermal energy is also applied by low-temperature hot air used to atomize soy sauce as a raw material to be treated and radiation of radiant heat from the inner surface of the tower main body.

Next, a method of manufacturing the dry powder soy sauce will be described.

The raw material soy sauce r as liquid type seasoning contains at least sodium chloride (salt content), seasoning components (total nitrogen content, etc.) and solvent (alcohol and water), etc., and for example, the following components are contained as "koikuchi (strong) soy sauce" components.

(1) Total nitrogen content : 1.602% ... (delicious taste component, solid component) asparaginic acid, glutamic acid
(2) Salt content : 16.15% (deliquescence-contributing component, solid content)
(3) Saccharide: 3.1% ... (deliquescence-contributing component) reducing sugar, glucose, arabinose, glycerin, alanine
(4) Solid content : 19.1% ... (part of solid component serving as nucleus, solid content) inorganic material (potassium, calcium, magnesium, phosphorous, iron, etc.), enzyme
(5) Alcohol content: 2.65% ... (evaporation vaporization component)
(6) Moisture content: 57.4% ... (evaporation vaporization component)

In this embodiment, the soy sauce r as raw material is not provided with any excipient for shaping the soy sauce in a powdery form. This is because the taste of the soy sauce as the raw material is prevented from varying.

As described above, the temperatures T1, T2, T3 (that is, the temperature at the electric heater side) at the respective sites in the drying tower main body 1 are adjusted. In this embodiment, the temperature T3 at the lower side is set to 82°C (the azeotropic temperature between water and alcohol in soy sauce) or less, the temperature T1 at the upper site is set to 40°C or more, and the temperature T2 at the center portion is set to an intermediate temperature between the temperature T1 at the upper portion and the temperature T3 at the lower portion. At this time, the temperatures are controlled so as to satisfy the following inequality.

$$10°C \leq |T3{-}T1| \leq 30° \qquad \dots (1)$$

The control of the temperatures T1, T2, T3 at the respective sites in the drying tower main body 1 is performed by the controller 21 (see Fig. 1) described above.

Subsequently, the raw material soy sauce r is sprayed into the tower main body 1 together with hot air of about 80°C while heated at about 70°C by the heater 5a disposed between the tank 4 and the nozzle 2.

Fig. 2(B) shows a disturbance state of the fog drips in the tower main body. A disturbance state is efficiently created in the tower main body 1 by air current as shown in Fig. 2(A). As a result, the fog drips of the soy sauce r are formed like heavy fog or cloud sea, and each fog drip floats, rotates and repeats fusion and coalition with other fog drips while riding air currents (ascending air current and descending air current) in the drying tower main body 1, whereby the soy sauce r is dried and dry powder soy sauce is obtained.

The actually-obtained dry powder soy sauce grows at a remarkably larger size as compared with the size of fine powder which would be obtained if fine fog drips of soy sauce are independently and individually dried as they are in the drying tower. That is, it is estimated that even when the fog drips are directly dried, dry powder soy sauce having a required size is not formed.

From this observation, the inventor has inferred as follows. The fine fog drips of soy sauce sprayed into the drying tower main body 1 float, turn, rotate and impinge against one another under a hot-air atmosphere in the drying tower main body (filled with far infrared ray and hot air), and fine fog drips which impinge against one another fuse and merge together, whereby they gradually grow into assemblies. That is, they grow as if soap bubbles come into contact with one another and adhering soap bubbles grow greatly while floating, turning and falling. In this growth process, outer shells grow gradually so that small soap bubbles which cannot fuse together are enveloped by the growing outer shells as if seeds are enveloped. The outer shape of the fine powder as products is varied in accordance with the temperature condition and the disturbing condition described later in this growth process. The component of soy sauce corresponds the mixture of the solid content, the moisture and the volatile matter content described above, and thus the solid content contained in the raw material soy sauce forms the skeleton of the powder as the drying proceeds.

That is, the temperature of the fog drips of the soy sauce r sprayed into the drying tower main body 1 is increased from the intermediate portion to the lower portion while the fog drips concerned is gently heated to prevent heat shock, and a large amount of far infrared ray is applied from the side wall of the drying tower main body 1 during this process, whereby the inside of each fog drip is also evenly heated. Accordingly, granulation of soy sauce is promoted with preventing such a dry situation that the internal pressure of the fog drip is increased and thus phreatic explosion occurs due to drying of only the surface of the fog drip.

In this granulation process, the ascending air current U and the descending air current dn can be generated along the wall surface of the inside of the drying tower main body 1 and at the center portion thereof respectively according to the equation (1), whereby the floating time of the fog drips in the tower main body 1 can be adjusted.

Upon summarizing the foregoing, a guideline for setting the drying condition (heating condition) is as follows. The embodiment has been achieved as a result of consideration of the experience of manufacturing a small amount of dry powder soy sauce, the observation of electron micrographs, etc., the infer of evaporation behavior from the outer shape of the dry powder soy sauce, estimation, etc.

> (1) When fog drips are dried, water vapor occurs from the fog drips. In this case, in order to prevent "water boiling" as much as possible, the heating condition and the heating means for the fog drips of soy sauce are made suitably usable in a low-temperature drying range which has not been hitherto applied.
> (2) In order to perform a low-temperature drying operation, radiation of a large amount of "far infrared ray" and a small amount of hot air are used in combination as thermal energy which contributes to drying.

The temperature in the drying tower main body is set to the azeotropic point (about 82°) of water and alcohol contained in raw-material soy sauce or less, thereby preventing explosive occurrence of water vapor.

Specifically, the temperature is set to 40°C to 82°C which is not more than the azeotropic point of the mixture of water and alcohol constituting the component of the raw-material soy sauce, and the drying temperature is set to this range, preferably set around 60°C.

The reason for this resides in that water vaporization from fog drips is made further gentle as compared with conventional techniques.

As a result, when the drying temperature is lower than 82°C as the azeotropic temperature of water and alcohol constituting the component of soy sauce, it is possible to leave the moisture of about 7% to 8% in the dry powder soy sauce, and thus the alcohol content and the delicious taste component contained in soy sauce can remain.

(3) This embodiment aims at the moderate evaporation of water from fog drips, and thus the length of the drying tower main body is set to be long than a conventional apparatus for performing a high-temperature drying operation in order to assist drying.

> (4) It is necessary that "ascending air current" along the inner wall surface of the drying tower main body is naturally generated by the temperature difference between the upper and lower portions of the tower main body and the heating state is conformed with the dry state. Therefore, the temperature of the drying tower main body is divided into the upper portion, the intermediate portion and the lower portion or into the upper and lower portions, and the temperature at the lower portion side is set to a high temperature while the temperature at the upper portion side is set to be lower than the temperature at the lower portion side. The temperature difference between the upper portion and the lower portion is preferably set to 15°C or more. In this case, when the maximum temperature is lower than 82°C as the azeotropic temperature of water and alcohol constituting the component of soy sauce, this embodiment may be implemented even if the temperature difference is equal to about 20°C to 30°C.
> That is, in the actual manufacturing apparatus, if the temperature difference between the upper and lower portions is small, ascending air current is not sufficiently generated. If the temperature at the lower portion side (high-temperature side) is increased to increase the temperature difference, the temperature difference is out of the above temperature range. Accordingly, it is necessary that the temperature difference which can be implemented in the above temperature range is set in the actual device.

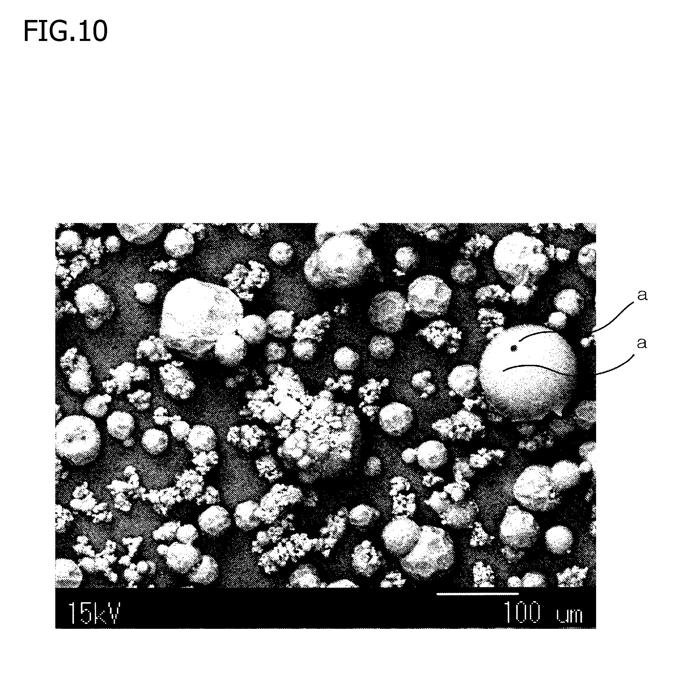

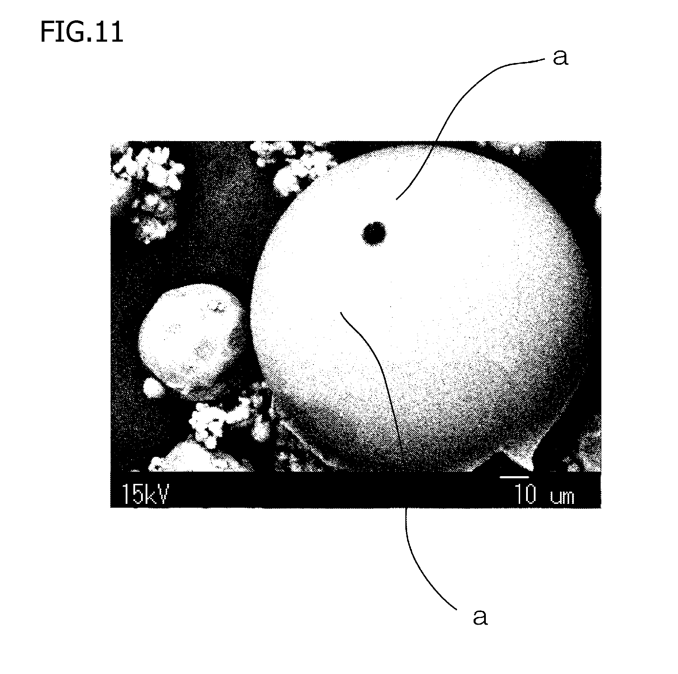

Fig. 10 shows a scanning electron micrograph of dry powder soy sauce obtained by the manufacturing method of this embodiment, and Fig. 11 shows the same scanning electron micrograph when a large-diameter spherical body is enlarged.

In the construction of this embodiment, the fog drips m of the soy sauce r float over a long time under the disturbance state in the drying tower main body which is heated so that the fog drips m are set to a predetermined temperature (the azeotropic temperature of water and alcohol in soy sauce or less) and have a predetermined temperature distribution based on the formula (1), and each fog drip repeats contact, fusion and coalition with other fog drips or with substantially-dried power soy sauce obtained by evaporation of partial moisture from the fog drip. Accordingly, as shown in Fig. 10, small-diameter spherical bodies of about 5 to 30$\mu$m in diameter are formed, or large-diameter spherical bodies of about 30$\mu$m or more (more preferably 40$\mu$m or more) in diameter are further formed from the formed small-diameter spherical bodies.

In this embodiment, the small-diameter spherical bodies and the large-diameter spherical bodies form mixture bodies. As shown in Fig. 11, the surface layer portion of the large-diameter spherical body is formed to have a smooth surface having no rift, and also segregation of sodium chloride crystals (or consolidated material obtained through consolidation of sodium chloride crystals) appears at only two places and it is suppressed at the other sites. In the photograph, the segregation of sodium chloride crystals appears with a white spot.

With respect to the sizes of the sodium chloride crystal, etc. based on segregation, in the case where the size is equal to 5$\mu$m or less as a single body, deliquescence can be suppressed to a low level even when a plurality of crystals, etc. appear on the surface layer portion of the spherical body. Furthermore, in order to suppress deliquescence to a low level, the area of the surface layer portion covered by sodium chloride crystals, etc. may be practically suppressed to substantially 30% or less in area ratio with respect to the total surface area of the whole large-diameter spherical body, more preferably to 15% or less in area ratio and further more preferably to a value less than several percentages. In this case, even when the sodium chloride crystals, etc. absorb moisture, they are disposed to be physically far away from one another, and thus they would not cooperate with one another even if moisture (saturated salt solution)adheres to the surface of each of the sodium chloride crystals, etc. Therefore, the moisture is diffused to the air again with no increase of the amount of adhering moisture, and a large amount of moisture can be stocked, so that consolidation of sodium chloride crystals which causes deliquescence grows hardly.

Here, the segregation to the surface layer portion is suppressed because it is estimated that sodium chloride contained in raw-material soy sauce does not move to the surface layer side of the spherical body at a dash together with water due to the slow drying operation, and thus sodium chloride evenly stays at each portion.

The dry powder soy sauce of this embodiment has a high residual moisture content of 7 to 9%, and thus sodium chloride (or chlorine ion and sodium ion) is evenly held in each spherical body, so that sodium chloride is hardly crystallized.

Here, the comparison with dry powder soy sauce manufactured by the conventional manufacturing method will be described.

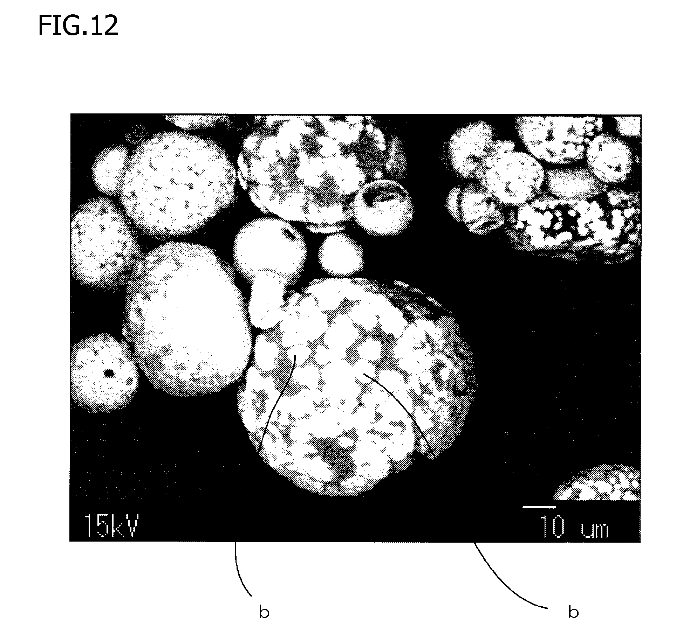

Fig. 12 is a scanning electron micrograph of dry powder soy sauce based on the conventional manufacturing method. As shown in Fig. 12, segregation of sodium chloride crystals appears everywhere (at white-colored places indicated by a reference character b) on the surface layer portion of the large-diameter spherical body, and it is observed that segregation of sodium chloride crystals appear substantially evenly over the whole area of the surface layer portion. When the dry powder soy sauce based on the conventional manufacturing method is eaten with relish, it tastes strongly salty as it supports the above observation.

On the other hand, with respect to the dry powder soy sauce of this embodiment, the segregation of sodium chloride crystals is observed at only two places a within the range of the resolution ($\fallingdotseq$ 1$\mu$m) of the micrograph on the surface layer portion of the large-diameter spherical body and no broad segregation is observed even when the large-diameter spherical body has a diameter of 100$\mu$m or more. When the dry powder soy sauce of this embodiment is eaten with relish, the salty taste is suppressed and it tastes mild and mellow as it supports the above observation.

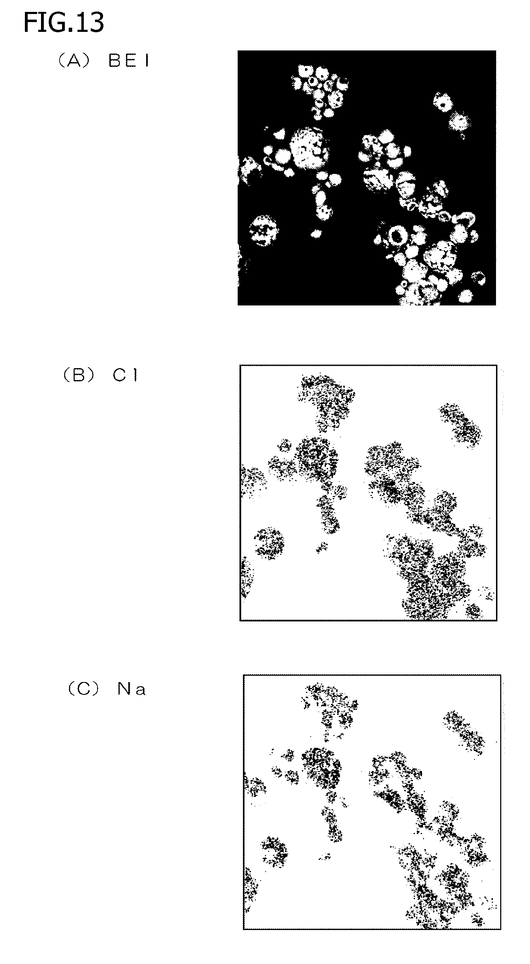

Fig. 13 is a diagram showing the association between the surface state of the dry powder soy sauce and a element analysis result of the surface layer (about 1$\mu$m from the surface) in this embodiment. Here, Fig. 13(A) shows a BEI (Back scattering Electron Image), Fig. 13 (B) is a diagram showing a distribution state of chlorine atoms (Cl) by EDS (Energy Dispersive X-ray Spectroscopy), and Fig. 13 (C) is a diagram showing a distribution state of sodium atoms (Na) by EDS.

According to the BEI image as shown in Fig. 13(A), the segregation of sodium chloride crystals is not observed in appearance. In the BEI image, when sodium chloride crystals exist, a whitish portion is apparently observed on the surface of the large-diameter spherical body (substantially 80$\mu$m in diameter) of dry powder soy sauce shown at the center portion of Fig. 13 (A) . However, it is not apparently observed in Fig. 13(A). Furthermore, with respect to the element analysis, when attention is paid to the large-diameter spherical body (substantially 80$\mu$m in diameter) of the dry powder soy sauce shown at the center portion of Fig. 13(A), it is found that chlorine atoms (Cl) are substantially evenly dispersively distributed on the large-diameter spherical body as shown in Fig. 13 (B) . If sodium chloride crystals exist, the density of the dots of the chlorine atoms (Cl) would increase and thus the black color of the surface of the large-diameter spherical body would become darker. However, this is not apparently observed in Fig. 13(B).

Likewise, with respect to sodium atoms (Na), it is found in Fig. 13(C) that the sodium atoms are substantially evenly dispersively distributed on the surface of the large-diameter spherical body of the dry powder soy sauce shown at the center portion of Fig. 13(A). In this case, if sodium chloride crystals exist, the density of the dots of the sodium atoms (Na) would increase and thus the black color of the surface of the large-diameter spherical body would become darker. However, this is not apparently observed in Fig. 13(C).

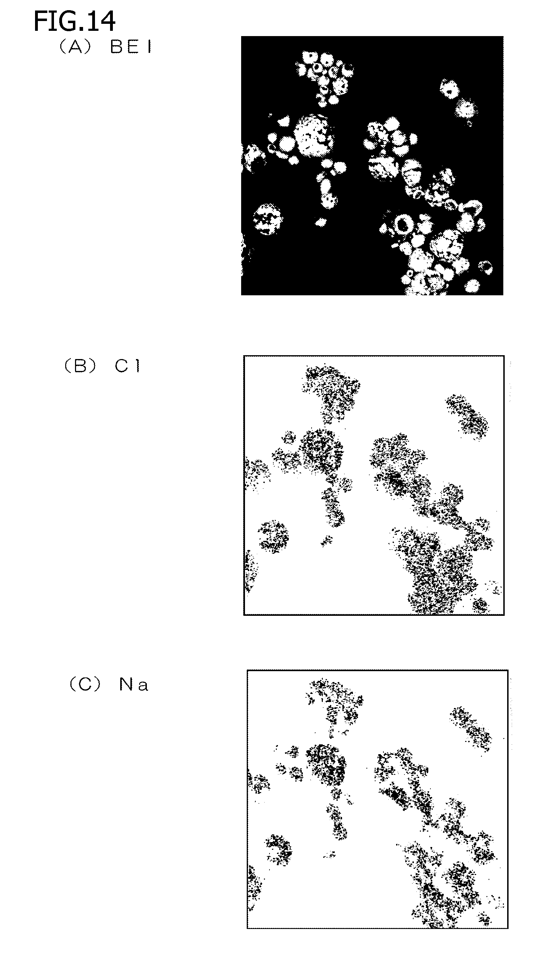

Fig. 14 is a diagram showing an element analysis result of the surface layer (about 1μm from the surface) based on a reflection electron image in dry powder soy sauce samples of the conventional example. Here, Fig. 14 (A) shows a BEI image, Fig. 14 (B) is a diagram showing a distribution state of chlorine atoms (Cl), and Fig. 14 (C) is a diagram showing a distribution state of sodium atoms (Na). According to the BEI image shown in Fig. 14(A), many white portions are apparently observed here and there on the surfaces of samples, and a state which is estimated as a segregation state of sodium chloride is observed in the conventional samples. When attention is paid to a large-diameter spherical body of conventional dry powder soy sauce (the large-diameter spherical body having the largest diameter existing at an obliquely upper left side with respect to the center of Fig. 14(A), it is found that chlorine atoms (Cl) are clearly distributed into black areas (areas having a large number of chlorine atoms) and white areas (areas having a small number of chlorine atoms), and chlorine atoms exit unevenly and locally on the surface. Likewise, it is found that sodium atoms (Na) exist unevenly and locally on the large-diameter spherical body as shown in Fig. 14(C).

From these results, with respect to the conventional dry powder soy sauce, the segregation of sodium chloride is observed on the surfaces, and thus it is estimated that deliquescence caused by sodium chloride occurs. As described above, it is estimated that the segregated sodium chloride induces a strongly salty taste when the dry powder soy sauce is eaten with relish.

On the other hand, with respect to the dry powder soy sauce of this embodiment, chlorine (Cl) and sodium (Na) are substantially evenly distributed in a dispersive state in the surface layer existing up to about 1μm in depth. However, segregation of sodium chloride crystals is not found at the surface layer portion, and it is found that deliquescence caused by sodium chloride is suppressed. In connection with this fact, when the dry powder soy sauce of this embodiment is eaten with relish, the salty taste is suppressed and the dry powder soy sauce is mild and mellow in taste as described above. It is estimated that this is because the components other than sodium chloride appear on the surface.

Next, the cross-sectional state of the dry powder soy sauce will be reviewed.

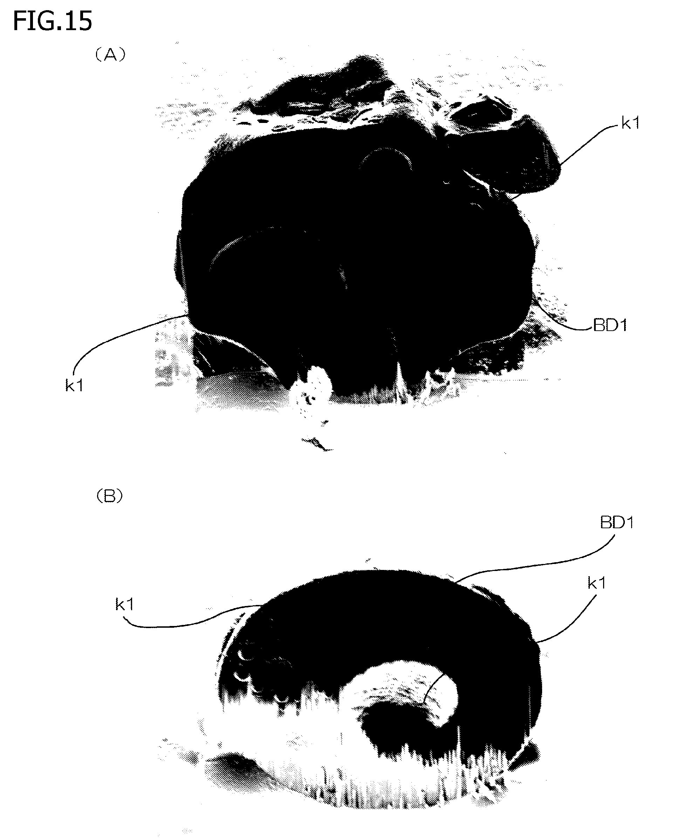

Fig. 15 is a scanning ion micrograph of the cross-section of the dry powder soy sauce of this embodiment which is subjected to FIB processing. Figs. 15 (A) and Fig. 15 (B) are cross-sections of spherical bodies of different samples.

The FIB (Focused Ion Beam) processing is a technique of irradiating a sample with a gallium (Ga) ion beam to sputter the sample and processing a specific place of the sample while watching a scanning ion microscopic image, and it can obtain a smooth cross-section of the sample.

As shown in Fig. 15 (A) and Fig. 15(B), in both the samples of the dry powder soy sauce, plural voids k1 appear in cross-sectional view, the samples are formed to be fleshy, and the issues of the fleshy portions BD1 are observed to be closely packed and homogeneous.

Accordingly, with respect to the dry powder soy sauce of this embodiment, it is estimated that there is no segregation of sodium chloride crystals and also sodium chloride is dispersed stably and evenly even inside the samples, and this also contributes to suppression of deliquescence.

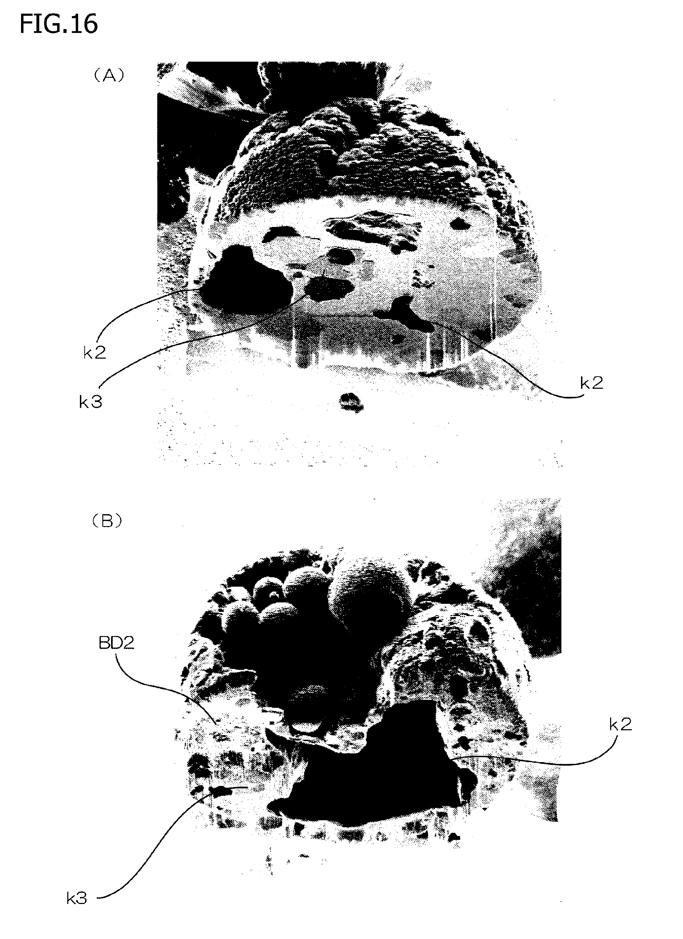

Fig. 16 shows a scanning ion micrograph of the cross-section of the conventional dry powder soy sauce which is subjected to FIB processing. Figs. 16 (A) and 16 (B) show the cross-sections of spherical bodies of different samples.

As shown in Figs. 16(A) and (B), plural voids k2 appear in cross-sectional view, the tissues of the fleshy portions are not homogenous in appearance, and component-different portions which are estimated to be crystals K3 of sodium chloride are observed partially. Cracks and recesses are observed on the surfaces of the shell bodies of some particles. Accordingly, it is estimated that segregation of sodium chloride and cracks on the surface affect deliquescence.

The dry powder soy sauce d as a generated resultant material is separated by a cyclone 7 shown in Fig. 1, and then taken out through the valve into the tank 7a.

The dry powder soy sauce d withdrawn from the tank 7a is put into a container (not shown), and the container is covered with a lid. A required amount of soy sauce is taken out from the container by releasing the lid and then the container is covered by closing the lid occasionally. This opening/closing operation is repeated at several tens times or more. Amazingly, in the case of the dry powder soy sauce which has been dried at a low temperature (60 to 75°C) while far infrared ray is applied into the drying tower, air is forcedly exchanged from the outside of the container into the inside of the container every time the lid is released and closed, and thus there is an opportunity that moisture invades into the container. However, thedrypowder soy sauce has been stocked with no deliquescence even when a very long time elapses from the manufacturing time. As a result of component analysis and chemical quality estimation of this dry powder soy sauce, it is estimated that the component is not substantially varied from the normal soy sauce and the original state of taste and flavor as soy sauce is kept.

This dry powder soy sauce contains no dextrin as excipient unlike the conventional dry powder soy sauce, and the dry powder soy sauce as the raw material is sold as goods on the market. The difference between this dry powder soy sauce and the conventional dry powder soy sauce is also found in residual moisture content. The residual moisture content of the former is equal to 2 to 3%, however, that of the latter is equal to 7 to 9%. Since the drying temperature is set to be not more than the azeotropic temperature of water and alcohol in soy sauce as described above, it is confirmed that evaporation of water and evaporation of alcohol in the drying process are suppressed and "umami" (the fifth taste sensation) component is firmly contained together with alcohol. In this case, the residual moisture content may be set to 4 to 12%. This is because if the residual moisture content is less than 4%, the "umami" component is escaped together and also if the residual moisture content is more than 12%, it is impossible to keep a dry-touch powder state. Furthermore, the residual moisture content may be preferably set to 6 to 10% from the viewpoint of the containment of the "umami" component and the maintenance of the powder state.

More preferably, the residual moisture content may be set to 7 to 9% as in the case of this embodiment, whereby the same level "umami" component as the raw-material soy sauce can be felt and the dry-touch powder stage can be kept for a long term.

Next, the feature of the dry powder soy sauce of this embodiment will be described in detail in comparison with the conventional dry powder soy sauce.

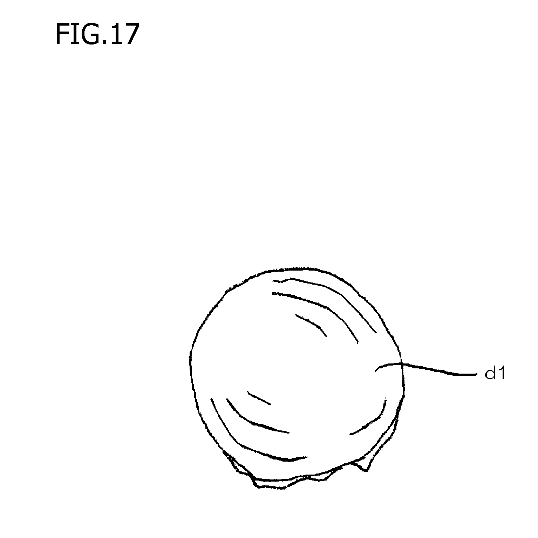

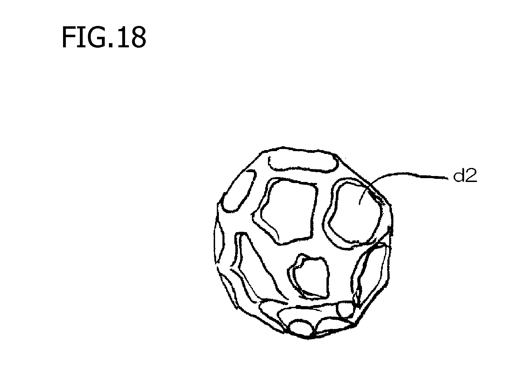

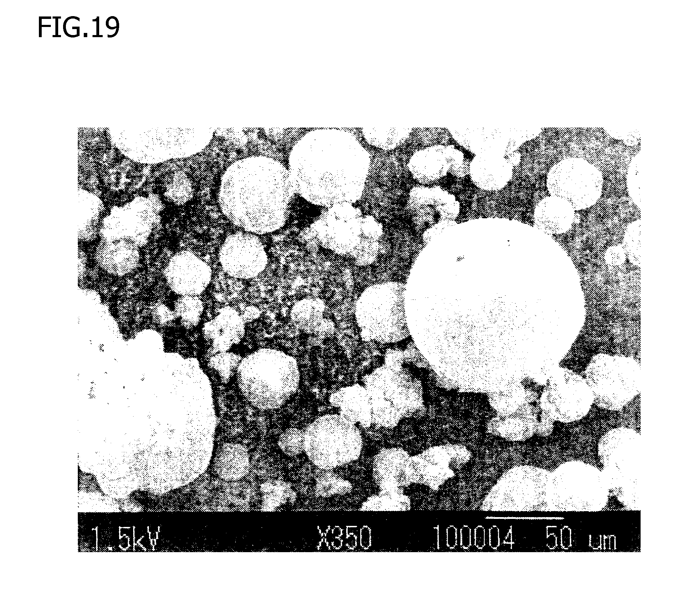

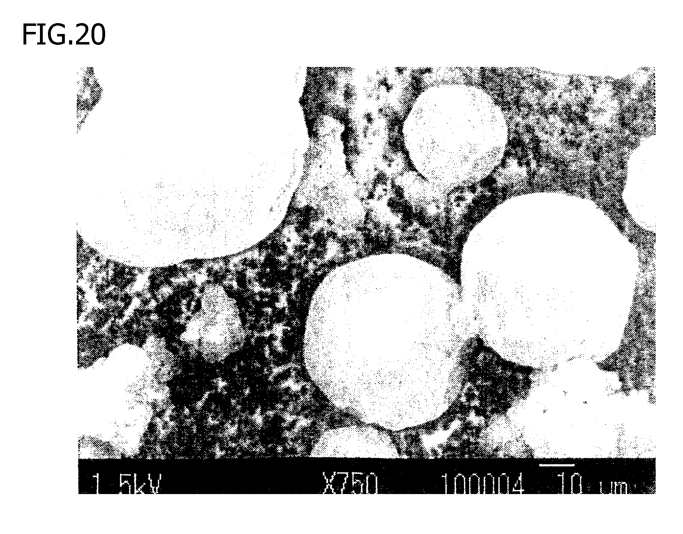

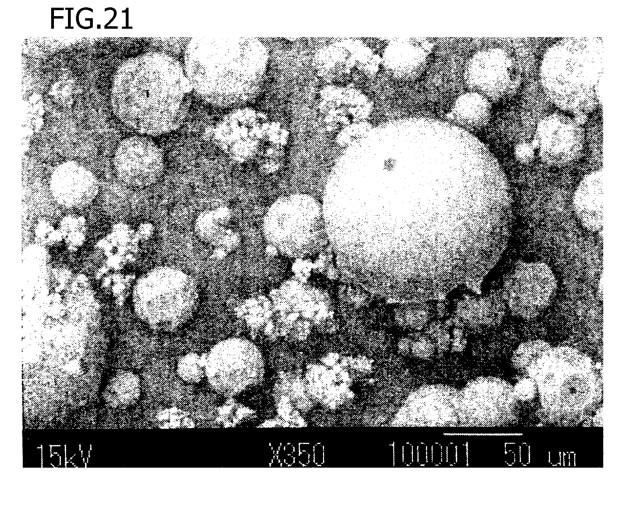

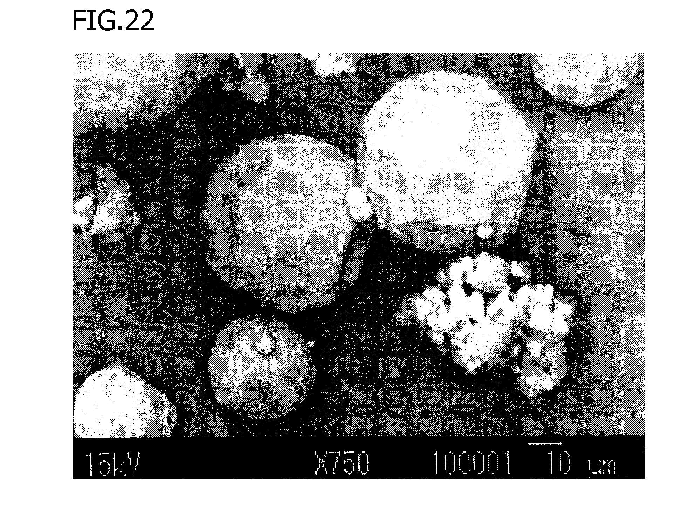

Figs. 17 and 18 show the illustrations d1 and d2 of the large-diameter spherical bodies of the dry powder soy sauce according to this embodiment contained in the electron micrograph. Figs. 19 and 20 show secondary electron images (SEI) of the dry powder soy sauce. Furthermore, Figs. 21 and 22 show BEI images (reflection electron images).

In these cases, Figs. 19 and 21 show electron micrographs of 350 times in magnification. Figs. 20 and 22 show electron micrographs of 750 times in magnification.

According to the calculation based on the electron micrographs shown in Figs. 17 to 22, the large-diameter spherical bodies constituting the dry powder soy sauce of this embodiment range from 40 to 120$\mu$m in diameter, and the small-diameter spherical bodies constituting the dry powder soy sauce of this embodiment range from about 30 to 40$\mu$m in diameter. These large and small spherical bodies have the following features in appearance.

(1) As shown in Figs. 19 and 21, spherical bodies which grow greatly (large-diameter spherical bodies) and spherical bodies which do not so greatly grow (small-diameter spherical bodies) exist under a mixing state. The number of large-diameter spherical bodies is not so large.

(2) The large-diameter spherical bodies contain spherical bodies having beautiful and smooth surfaces as shown in Figs. 19 and 21, bodies having "tortoiseshell-like or soccer-ball type" projections or pattern on the surfaces thereof as shown in Fig. 22, and bodies as shown in Fig. 20 the shapes of which are near to those of Fig. 22.

(3) As shown in Figs. 17 to 22, most of the large-diameter spherical bodies and the small-diameter spherical bodies form "independent spherical shell bodies". Neither a crack nor an opening is observed on the surfaces thereof.

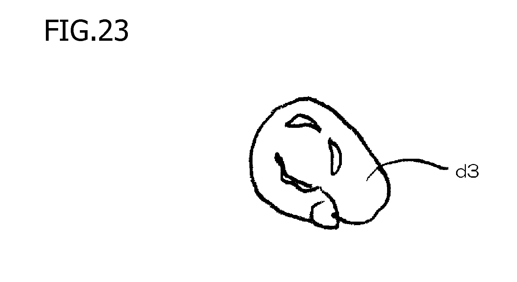

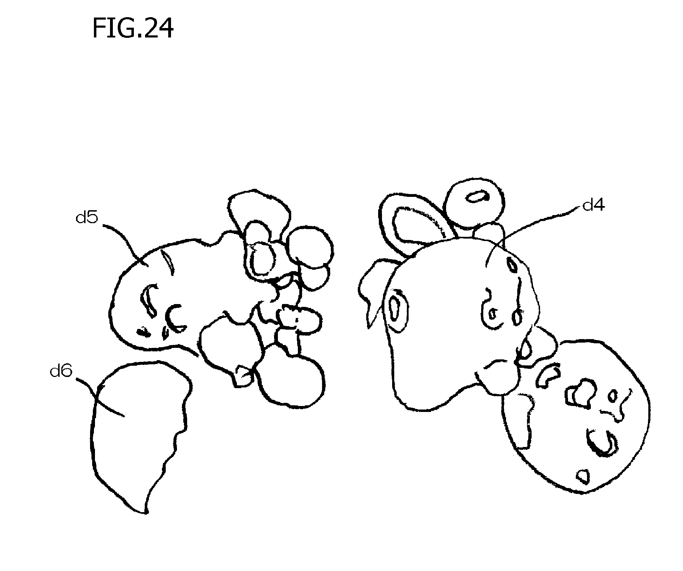

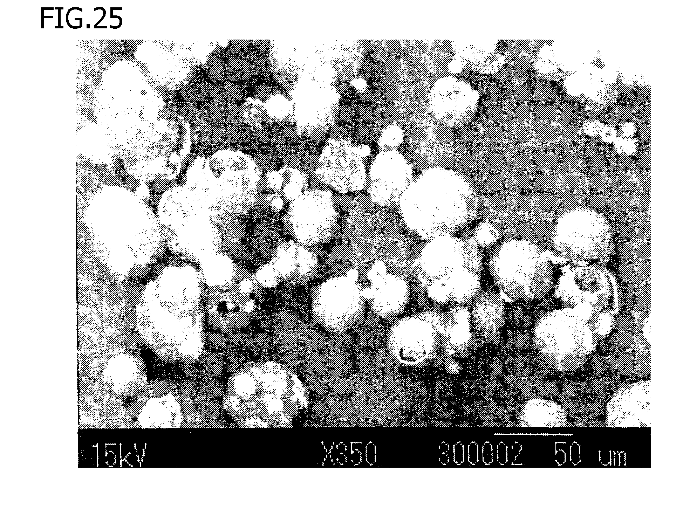

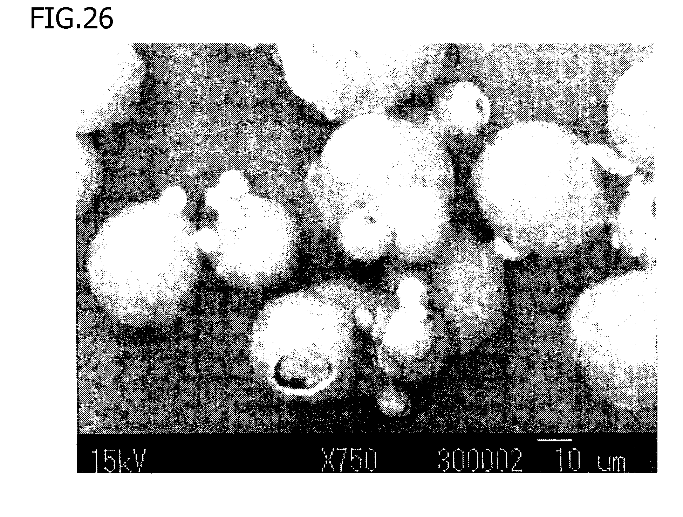

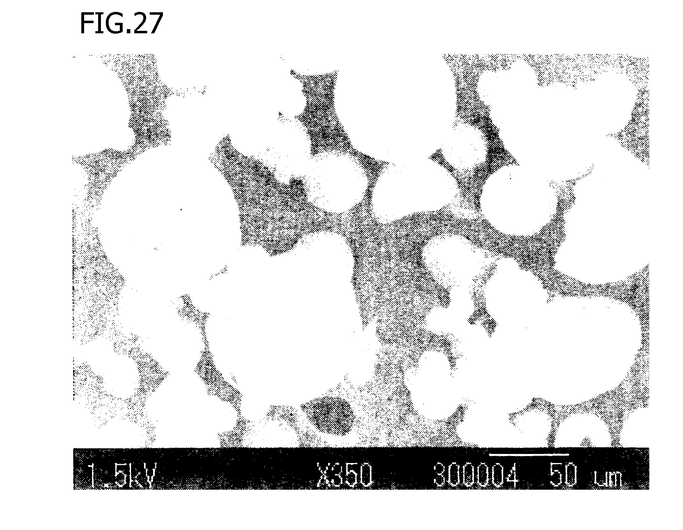

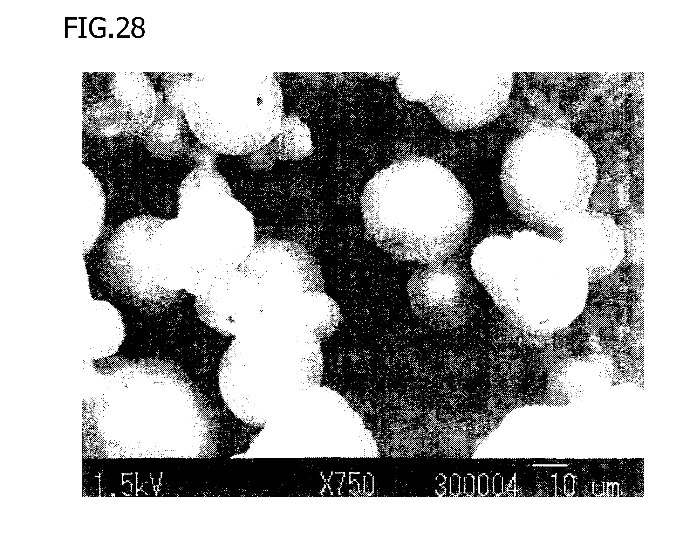

Figs. 23 and 24 (illustrations of the micrograms) show the features of conventional commercially-available dry powder soy sauce d3, d4, d5 and d6, Figs. 25 and 26 show BEI (Back scattering Electron Image)images concerning commercially-available dry powder soy sauce which are picked up by a scanning electron microscope, and Figs. 27 and 28 show secondary electron images (SEI) of commercially-available dry powder soy sauce which are picked up by an electron microscope. Here, Figs. 25 and 27 show the images of 350 times in magnification, and Figs. 26 and 28 show the images of 750 times in magnification.

The features of the dry powder soy sauce which is dried by the conventional high-temperature applied high-speed heating method will be summed up below.

Estimating the outline dimensions from the micrograms shown in Figs. 25 to 28, the diameter of one fine powder ranges from 100 to 120$\mu$m for larger-diameter spherical bodies and ranges from about 15 to 25$\mu$m for smaller-diameter spherical bodies, and bodies having various sizes are mixed. These spherical bodies have the following features in appearance.

(1) The powders d3 to d6 of Fig. 23 and Fig. 24 constitute spherical bodies. The sizes thereof are not even as a whole, and they are a mixture of large and small spherical or potato-like fine powders.

(2) The surface of the spherical body is uneven and rugged, and many holes or cracks are formed on the outer surface of the spherical body.

(3) Plural small-diameter spherical bodies are contained as granular bodies in a large-diameter spherical body (see Fig. 25 and Fig. 26).

(4) There are little spherical bodies which are individually separated from one another. Many small-diameter spherical bodies are contained in a large-diameter spherical body, and middle-diameter or small-diameter spherical bodies adhere to the surface of a large-diameter spherical body as humps, and other spherical bodies further adhere to the above spherical bodies as if they have the outlook of a cluster of ginger (Figs. 25 and 26).

That is, according to the drying method of spraying hot air of about 120°C to 260°C which has been adopted in prior arts, moisture of fog drips instantaneously suffers a large amount of heat energy when water is vaporized. It is estimated that water is vaporized at a dash through the delivery of the heat energy. In addition, the rapid vaporization of water due to this rapid heating is unavoidable in the conventional drying method.

Accordingly, it is estimated that water vapor occurring from liquid droplets generated in the instantaneous or short-time drying process destructs bone structures which is forming shell bodies as assemblies of solid contents which have grown or are growing. That is, moisture in fine fog drips vaporizes under the boiling state. This water vapor is surrounded by shell bodies, has no way out and thus vaporizes while destructs the shell bodies (phreatic explosion).

Furthermore, according to the prior arts, the shape of the spherical bodies varies in connection with the magnitude of the injection state of water vapor, and particularly explosive injection of water vapor destructs the shell bodies like craters on the surface of the moon.

On the other hand, small-scale injection causes small cracks and holes in the shell bodies. Furthermore, the scale of the surface area, that is, the contact area with air is affected by the destruction state of the shell bodies. Therefore, it is estimated that in connection with this, the deliquescence is more greatly increased as compared with the dry powder soy sauce of this embodiment.

The reason why the deliquescence of the dry powder soy sauce of this embodiment is low and the dry-touch state can be secured is as follows.

(1) Segregation of sodium chloride crystals on the surface layer (and inner layer) is suppressed and sodium chloride is distributed to be dispersed on the surface.

(2) A residual moisture content is high, the "umami" component is firmly contained and sodium chloride is also firmly contained in the inner layer.

(3) The drying process is executed at a relatively low temperature and for a long time. Therefore, the large-diameter spherical bodies have relatively large diameters and hardly aggregate, and further the surface area as a whole is reduced, so that moisture absorption occurs hardly.

From these results, according to the dry powder soy sauce of this embodiment, the component which causes deliquescence hardly comes into contact with air or is protected from being exposed, so that the deliquescence under the use state is reduced and the storage stability for a long term can be enhanced.

The foregoing description relates to an embodiment of the present invention, and the following modifications may be made.

In the foregoing description, the commercially available material is directly used as the composition of raw material soy sauce, however, this invention is not limited to this style. For example, even "grouts" (produced in a grouts drawing step after matured unrefined soy sauce is squeezed to manufacture non-pasteurized soy sauce and the non-pasteurized soy sauce is subjected to a heat treatment) occurring in a treatment process before soy sauce is completed can be easily dried, and delicious powder seasoning can be manufactured.

In the foregoing description, soy sauce is adopted as liquid seasoning, however, the application of the present invention is not limited to soy sauce.

For example, the present invention may be applied to buckwheat (soba) noodle sauce, ponzu sauce, fish sauce, oyster oil, sauce for grilled meat, sukiyaki, etc., dressing (particularly, non-oil dressing), ketchup, sauce, demiglace sauce, puree such as tomato puree or the like, soup, pepper sauce, mayonnaise or the like. With respect to seasonings which contain a large amount of oil content and thus are creamy in the above seasonings, they may be temporarily dissolved with solvent such as alcohol or the like, and then sprayed as fog drips into the drying tower.

Furthermore, in the foregoing description, no additive is added to the raw-material seasoning. In order to further suppress deliquescence, a small amount of water-repellent for foods can be added. As the water-repellent for foods may be used edible coating material comprising plant protein, rosin, sandarac, copal, Arabian gum, zein, soy protein, casein or the like.

## Claims

1. Dry powder seasoning, **characterized by** comprising mixtures containing large-diameter spherical bodies and small-diameter spherical bodies generated by drying seasoning of a liquid material containing at least sodium chloride, seasoning components and solvent under a temperature which is not more than the boiling temperature of the liquid material so as to suppress segregation of sodium chloride on surface layer portions of the large-diameter spherical bodies.

2. The dry powder seasoning according to claim 1, wherein chlorine and sodium are distributed under a substantially uniform dispersive state to suppress the segregation of sodium chloride.

3. The dry powder seasoning according to claim 1 or 2, wherein the sizes of sodium chloride crystals generated due to the segregation or consolidated bodies of the crystals are set to be 5$\mu$m or less.

4. The dry powder seasoning according to any one of claims 1 to 3, wherein the seasoning of the liquid material is dried at a temperature which is not more than the azeotropic point of alcohol and water contained in the solvent to generate the mixture bodies of the large-diameter spherical bodies and the small-diameter spherical bodies.

5. The dry powder seasoning according to any one of claims 1 to 4, wherein the surface portions of the large-diameter spherical bodies are formed to have smooth surfaces having no rift.

6. The dry powder seasoning according to any one of claims 1 to 5, wherein the moisture content of each mixture body ranges from 4% to 12% by weight.

7. The dry powder seasoning according to any one of claims 1 to 6, wherein the diameter of the large-diameter spherical bodies is equal to 40μm or more.

8. A method of drying seasoning of a liquid material containing at least sodium chloride, seasoning components and solvent to manufacture dry powder seasoning, **characterized by** comprising:

    spraying the seasoning of the liquid material into a drying tower so as to obtain fog drips of the seasoning, the drying tower being controlled so that the temperature in the main body of the tower is not more than the boiling temperature of the liquidmaterial and the temperature of an inner wall surface thereof at a high place is lower than the temperature of an inner wall surface thereof at a low place; and
    drying the fog drips while the fog drips are convected vertically in the drying tower.

9. The dry powder seasoning manufacturing method according to claim 8, wherein the temperature in the drying tower is controlled so that the temperature concerned is not more than the azeotropic point of alcohol and water contained in the solvent, and the seasoning of the liquid material is sprayed into the drying tower so as to obtain fog drips of the seasoning.

10. The dry powder seasoning manufacturing method according to claim 8 or 9, wherein a temperature difference is provided to the inner wall surface of the main body of the drying tower so that the temperature difference between high and low places ranges from about 10 to 30°C, and ascending current is generated along the inner wall surface by using the temperature difference.

11. An apparatus for drying seasoning of a liquid material containing at least sodium chloride, seasoning components and solvent to manufacture dry powder seasoning, **characterized by** comprising:

    a drying tower;
    a raw-material seasoning spraying unit disposed at an upper portion of the main body of the drying tower;
    a raw-material seasoning supply device having a temperature control function that is connected to the spraying unit;
    a cyclone connected to a lower portion of the main body of the drying tower to separate power dry soy sauce;
    a gas exhaust device for keeping the inside of the cyclone under a pressure-reduced state;
    a heating unit such as an electric heater or the like provided to the outer surface of the main body of the drying tower;
    a temperature sensor for measuring the temperature of a required place of the main body of the tower; and
    a controller for controlling a heating state of the heating unit so that the temperature in the main body of the tower is not more than the boiling temperature of the liquid material and the temperature of an inner wall surface thereof at a high place is lower than the temperature of an inner wall surface thereof at a low place.

12. The dry powder seasoning manufacturing apparatus according to claim 11, wherein the controller controls the heating state of the heating unit so that the temperature in the main body of the drying tower is not more than the azeotropic point of alcohol and water contained in the solvent, and the temperature of the inner wall surface thereof at the high place is lower than the temperature of the inner wall surface thereof at the low place.

13. The dry powder seasoning manufacturing apparatus according to claim 11 or 12, wherein the inner wall surface of the main body of the drying tower is subjected to water repellent finishing such as silicon finishing, fluorocarbon resin finishing or the like to prevent adhesion of droplets to the inner wall surface of the main body of the drying tower.

14. The dry powder seasoning manufacturing apparatus according to any one of claims 11 to 13, wherein a ceramic layer having a double-layer structure which contains an aluminum-oxide spray layer mainly containing aluminum oxide and a titan-oxide spray layer mainly containing titan oxide formed on the aluminum oxide spray layer is formed on the outer surface of the main body of the drying tower, and the heating unit is disposed on the outer surface of the titan-oxide layer.

15. The dry powder seasoning manufacturing apparatus according to claim 14, wherein the heating unit is disposed in each of at least three areas sectioned in the longitudinal direction of the main body of the drying tower through an electrically insulating layer on the ceramic layer having the double structure formed on the outer surface of the main body of the drying tower, and the controller controls the temperature of each of the heating units independently.

# FIG.1

FIG.2

(A)                    (B)

FIG.3

FIG.4

# FIG.5

# FIG.6

FIG.7

FIG.8

# FIG.9

FIG.10

FIG.11

FIG.12

b          b

# FIG.13

（A） BE I

（B） C l

（C） N a

# FIG.14

(A) BEI

(B) Cl

(C) Na

# FIG.15

（A）

（B）

FIG.16

（A）

k2

k3

k2

（B）

BD2

k2

k3

FIG.17

d1

FIG.18

d2

FIG.19

## FIG.20

FIG.21

EP 2 095 725 A1

## FIG.22

36

FIG.23

d3

FIG.24

FIG.25

FIG.26

FIG.27

FIG.28

## INTERNATIONAL SEARCH REPORT

| | International application No. |
| --- | --- |
| | PCT/JP2006/324022 |

**A. CLASSIFICATION OF SUBJECT MATTER**
*A23L1/237*(2006.01)i

According to International Patent Classification (IPC) or to both national classification and IPC

**B. FIELDS SEARCHED**

Minimum documentation searched (classification system followed by classification symbols)
A23L1/237

Documentation searched other than minimum documentation to the extent that such documents are included in the fields searched

| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2002-330722 A (Kabushiki Kaisha Komyosha),<br>19 November, 2002 (19.11.02),<br>Par. Nos. [0023] to [0026]<br>(Family: none) | 1-7<br>8-15 |
| X<br>A | JP 2000-41613 A (Ajinomoto Co., Inc.),<br>15 February, 2000 (15.02.00),<br>Claims 1, 3 to 5; Par. No. [0004]<br>(Family: none) | 1-7<br>8-15 |
| X<br>A | JP 60-232074 A (Okawara Mfg. Co., Ltd.),<br>18 November, 1985 (18.11.85),<br>Page 1, lower left column, lines 14 to 20<br>(Family: none) | 1-7<br>8-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>24 January, 2007 (24.01.07) | Date of mailing of the international search report<br>30 January, 2007 (30.01.07) |
| --- | --- |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/324022 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>A | JP 57-141274 A  (Ajinomoto Co., Inc.),<br>01 September, 1982 (01.09.82),<br>Claims<br>(Family: none) | 1-7<br>8-15 |
| X<br>A | JP 4-8275 A  (Kikkoman Corp.),<br>13 January, 1992 (13.01.92),<br>Page 2, upper left column, lines 2 to 12<br>(Family: none) | 1-7<br>8-15 |
| X<br>A | JP 6-70711 A  (Sagami Chemical Research Center.,<br>Kokutosu Honpo Nihon Shokuhin Kagaku Kabushiki<br>Kaisha),<br>15 March, 1994 (15.03.94),<br>Claim 4; Par. No. [0010]<br>(Family: none) | 1-7<br>8-15 |
| X<br>A | JP 2001-78728 A  (Kabushiki Kaisha Tsukioka),<br>27 March, 2001 (27.03.01),<br>Par. No. [0018]<br>(Family: none) | 1-7<br>8-15 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004105066 A

- JP 7213249 A

**Non-patent literature cited in the description**

- **Kabushikikaisha Saiwaishobo.** *Base and Application of Dried food,* 01 September 1997, 92-94